# EUROPÄISCHE PATENTANMELDUNG

(11) **EP 1 897 823 A2**
(43) Veröffentlichungstag der Anmeldung: **12.03.2008**
(21) Anmeldenummer: 07016768.9
(22) Anmeldetag: 27.08.2007
(51) Int. Cl.: B65G 1/08, B65G 47/88

(54) **Durchlaufregal mit Separiervorrichtung**

(30) Priorität: 06.09.2006 DE 102006041826
(71) Anmelder: BITO-LAGERTECHNIK BITTMANN GmbH, D-55590 Meisenheim (DE)
(72) Erfinder: Herder, Frank, 55606 Börweiler (DE)
(74) Vertreter: Hano, Christian

(57) **Zusammenfassung**

Das Durchlaufregal umfasst eine Separiervorrichtung zur Separierung von von einer Aufgabeseite (AS) zu einem Entnahmeanschlag (56) an einer Entnahmeseite (ES) hin beförderten Ladungsträgern (60, 70, 80, 90) unterschiedlicher Länge. Eine Steuerfahne (22) ist durch einen sich in Förderrichtung (FR) nach vorne bewegenden Ladungsträger (60, 70, 80, 90) aus einer ersten Stellung, in der sie sich über die Förderebene (FE) hinaus erstreckt, nach vorne in eine zweite Stellung verschwenkbar, in der sie in der Förderebene (FE) liegt. Eine in Förderichtung (FR) der Ladungsträger (60, 70, 80, 90) stromaufwärts vorgesehen Vereinzelungsanschlageinrichtung (16) mit einem Anschlagelement (42) steht über eine Betätigungsstange (30) so mit der Steuerfahne(22) in Verbindung, dass sich das Anschlagelement (42) in einem verriegelten Anschlagzustand befindet, in dem es sie sich über die Förderebene (FR) hinaus erstreckt, wenn sich die Steuerfahne (22) in ihrer zweiten Stellung befindet, und in einem Freigabezustand befindet, in dem es sich unter die Förderebene (FE) bewegen kann, wenn sich die Steuerfahne (22) in der ersten Stellung befindet. Der Abstand (a) zwischen dem Entnahmeanschlag (ES) und der Steuerfahne (22) ist größer als die Länge (c) in Förderrichtung des kleinsten Ladungsträgers (80) und kleiner als die Länge in Förderrichtung des größten Ladungsträgers (60), wenn sich die Steuerfahne (22) in ihrer zweiten Stellung befindet.

## Beschreibung

Die Erfindung betrifft ein Durchlaufregal mit Separiervorrichtung zur Separierung von von einer Aufgabeseite zu einer Entnahmeseite hin beförderten Ladungsträgern unterschiedlicher Länge nach dem Oberbegriff des Patentanspruchs 1.

Bei mit Schwerkraft betriebenen Durchlaufregalen für Ladungsträger, wie z. B. Paletten oder Behälter, steht immer an dem ersten Ladungsträger, der sich auf der Entnahmeseite befindet, der größte Druck an. Je länger die Durchlaufbahn des Durchlaufregals ist, desto höher ist dieser Druck. Aufgrund dieses hohen Staudrucks lässt sich der vorderste Ladungsträger an der Entnahmeseite nicht ohne Probleme entnehmen. Es kommt meistens zu Beschädigungen an dem Ladungsträger und/oder Lagergut.

Um eine solche Beschädigung zu vermeiden, ist aus der EP 0 842 874 A2 eine Separiervorrichtung bekannt, die eine erste vorderste Palette von einer nachfolgenden zweiten Palette separiert. Wenn sich die erste Palette in Förderrichtung zur Entnahmeseite des Durchlaufregals bewegt, verschwenkt sie eine angrenzend an die Entnahmeseite vorgesehene Steuerfahne aus einer ersten Stellung, in der sie sich über die Förderebene hinaus erstreckt, in eine zweite Stellung, in der sie in der Förderebene liegt. Die Steuerfahne ist über ein Betätigungsgestänge so mit einer in Förderrichtung stromaufwärts angeordneten Anschlageinrichtung verbunden, dass die Anschlageinrichtung bei der genannten Bewegung aus einer Freigabestellung, in der sie sich unterhalb der Förderebene befindet, in eine Anschlagstellung bewegt wird, in der sie sich über die Förderebene hinaus erstreckt. An dieser Anschlageinrichtung schlägt die nachfolgende zweite Palette an. Sobald die erste Palette von dem Durchlaufregal entnommen wird, wird die Steuerfahneneinrichtung durch eine Vorspanneinrichtung wieder in die erste Stellung bewegt. Gleichzeitig wird die Anschlageinrichtung über das Betätigungsgestänge aus der Anschlagstellung in die Freigabestellung bewegt, so dass sich die zweite Palette zur Entnahmeseite hin bewegen kann. Diese Bewegung der Paletten ermöglicht es, dass die erste Palette ohne Staudruck von dem Durchlaufregal entnommen werden kann.

Bei bekannten Separiervorrichtungen ist die Steuerfahne angrenzend an die Entnahmeseite angeordnet, so dass ihre Steuerung durch die Vorderkante des Ladungsträgers erfolgt. Sie sind jeweils nur auf eine bestimmte Ladungsträgerlänge abgestimmt. Der Abstand zwischen der Steuerfahne und der Anschlageinrichtung wird dabei so eingestellt, dass der Abstand zwischen der Anschlageinrichtung und dem hinteren Ende des ersten Ladungsträgers möglichst gering ist, um einen Platzverlust zu vermeiden. Es gibt derzeit jedoch mittlerweile auf dem Markt vermehrt Anwendungsfälle, bei denen Ladungsträger unterschiedlicher Länge in der gleichen Durchlaufbahn eines Durchlaufregals verwendet werden. Ein Anwendungsbeispiel sind z.B. Europaletten mit einer Länge von 1200 mm die gemischt mit Paletten mit einer Länge von 600 mm in dem Durchlaufregal gelagert werden. Dabei werden die kürzeren Paletten immer paarweise eingelagert. Wenn die bekannte Separiervorrichtung auf Europaletten mit einer Länge von 1200 mm abgestimmt ist, ist nach Beförderung einer kurzen Palette mit 600mm zur Entnahmeseite ein Freiraum mit der Länge der kurzen Palette zwischen der Anschlageinrichtung und dem hinteren Ende der ersten kurzen Palette vorhanden.

Der Erfindung liegt die Aufgabe zugrunde, mit konstruktiv einfachen Mitteln ein Durchlaufregal zu schaffen, an dessen Entnahmeseite Ladungsträger unterschiedlicher Länge mit geringem Platzverlust separiert werden können.

Diese Aufgabe wird erfindungsgemäß durch ein Durchlaufregal mit den Merkmalen des Patentanspruchs 1 gelöst. Eine vorteilhafte Ausbildung des erfindungsgemäßen Durchlaufregals ist Gegenstand des Patentanspruchs 2.

Das erfindungsgemäße Durchlaufregal ermöglicht die Separierung eines langen Ladungsträgers oder zwei oder mehrerer kurzer Ladungsträger von den übrigen Ladungsträgern, die sich in der Durchlaufbahn des Durchlaufregals befinden. Die Anschlageinrichtung wird nicht wie beim Stand der Technik durch die Vorderkante des Ladungsträgers, sondern durch seine Hinterkante gesteuert. Der Abstand zwischen der Steuerfahneneinrichtung und dem Entnahmeanschlag ist entsprechend des kürzesten zu befördernden Ladungsträgers ausgelegt.

Das erfindungsgemäße Durchlaufregal kann beispielsweise zur Separierung von Europaletten mit einer Länge von 1200 mm ausgelegt werden. Gleichzeitig ist jedoch auch die Separierung von zwei nachfolgenden Paletten mit einer Länge von 600 mm möglich.

Ein Ausführungsbeispiel der Erfindung wird nachstehend anhand der Zeichnungen näher gezeigt. Es zeigen
- Fig. 1: eine schematische Seitenansicht eines Durchlaufregals im Bereich einer Separiervorrichtung
- Fig. 1a: das Detail A von Fig. 1
- Fig. 1b: das Detail B von Fig. 1
- Fig.2: das Durchlaufregal von Fig. 1 mit einem langen Ladungsträger in einer ersten Transportstellung
- Fig.2a: das Detail A von Fig. 2
- Fig.2b: das Detail B von Fig. 2
- Fig.3: das Durchlaufregal von Fig. 1 mit dem langen Ladungsträger in einer zweiten Transportstellung
- Fig.3a: das Detail A von Fig. 3
- Fig.3b: das Detail B von Fig. 3
- Fig.4: das Durchlaufregal von Fig. 1 mit dem langen Ladungsträger in einer dritten Transportstellung

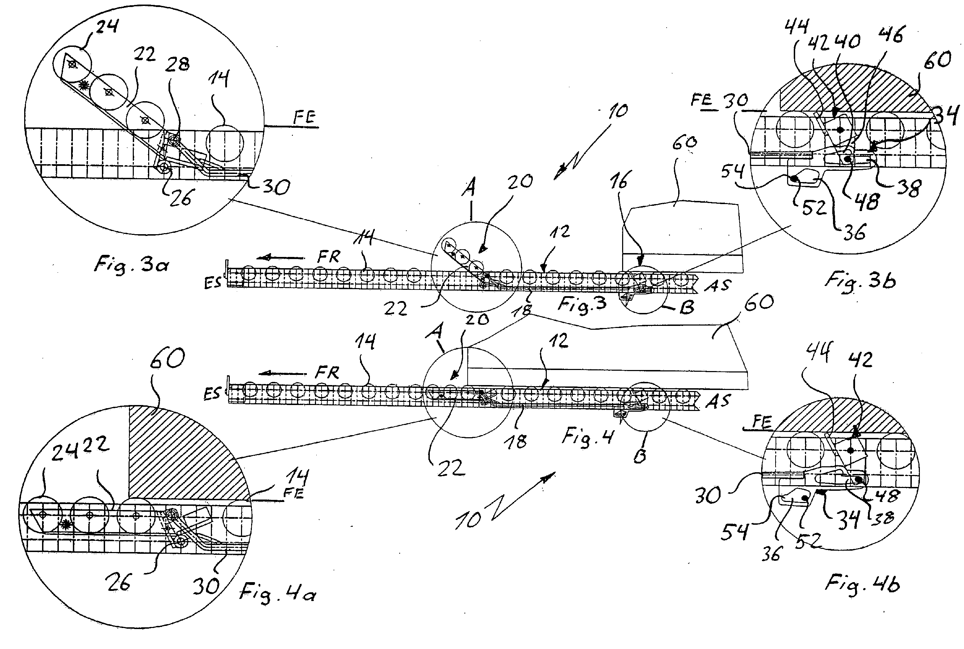

- Fig.4: das Detail A von Fig. 4
- Fig. 4b: das Detail B von Fig. 4

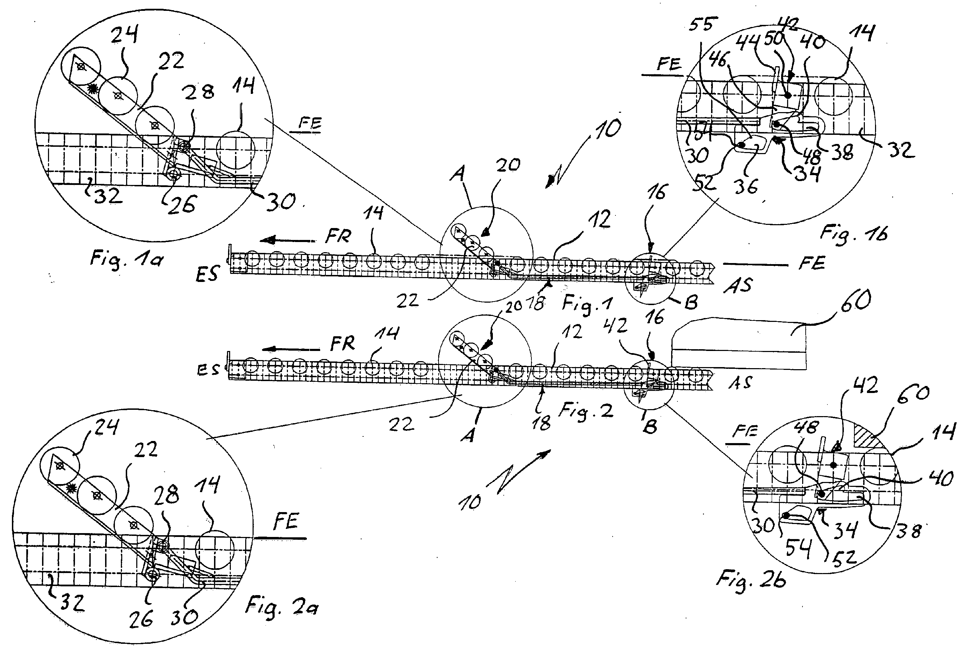

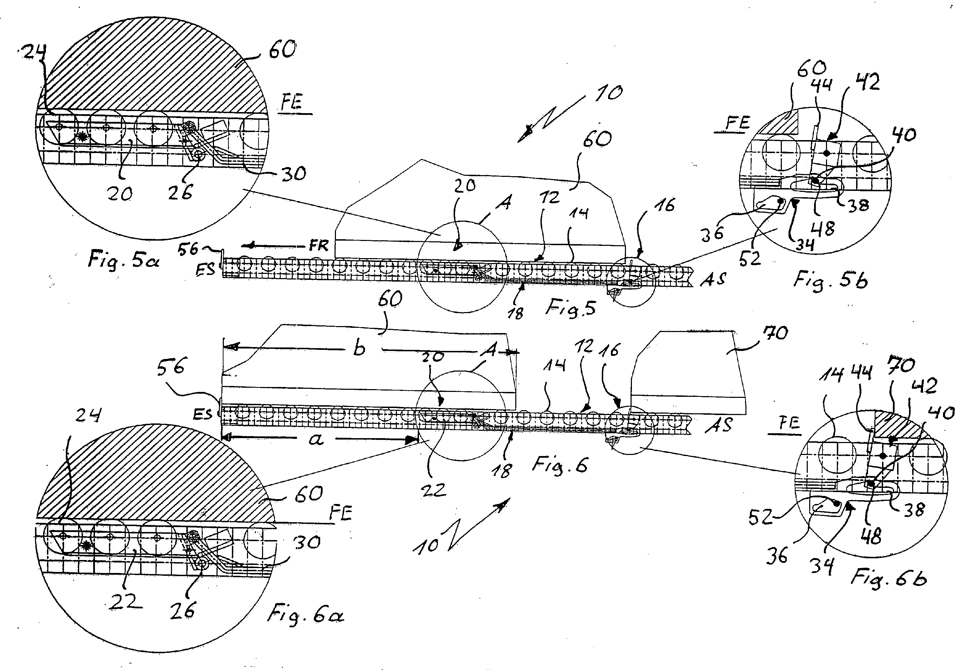

- Fig. 5: das Durchlaufregal von Fig. 1 mit dem langen Ladungsträger in einer vierten Transportstellung
- Fig. 5a: das Detail A von Fig. 5
- Fig. 5b: das Detail B von Fig. 5
- Fig. 6: das Durchlaufregal von Fig. 1 mit dem langen Ladungsträger in einer fünften Transportstellung
- Fig. 6a: das Detail A von Fig. 6
- Fig. 6b: das Detail B von Fig. 6

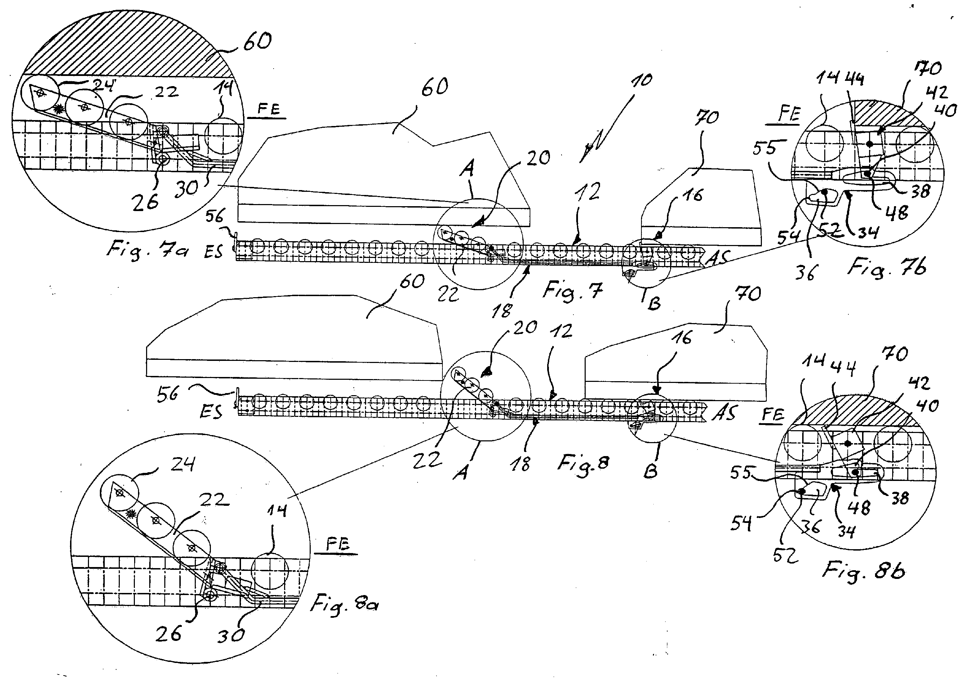

- Fig. 7: das Durchlaufregal von Fig. 1 bei Entnahme des Ladungsträgers
- Fig. 7a: das Detail A von Fig. 7
- Fig. 7b: das Detail B von Fig. 7

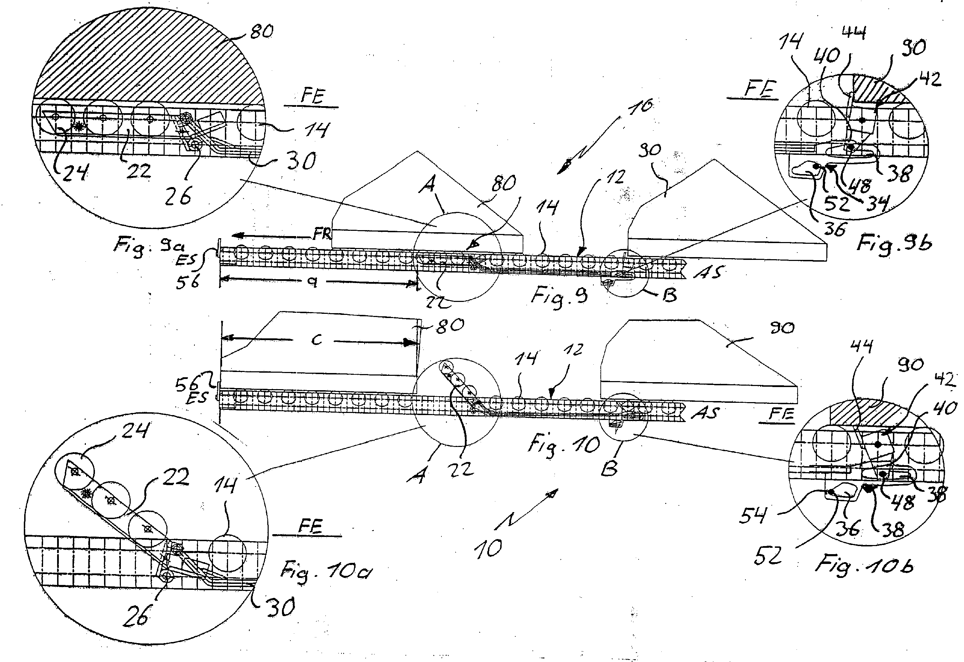

- Fig. 8: das Durchlaufregal von Fig. 1 nach Entnahme des Ladungsträgers
- Fig. 8a: das Detail A von Fig. 8
- Fig. 8b: das Detail B von Fig. 8
- Fig. 9: das Durchlaufregal von Fig. 1 mit einem kurzen Ladungsträger oberhalb einer Steuerfahneneinrichtung
- Fig. 9a: das Detail A von Fig. 9
- Fig. 9b: das Detail B von Fig. 9

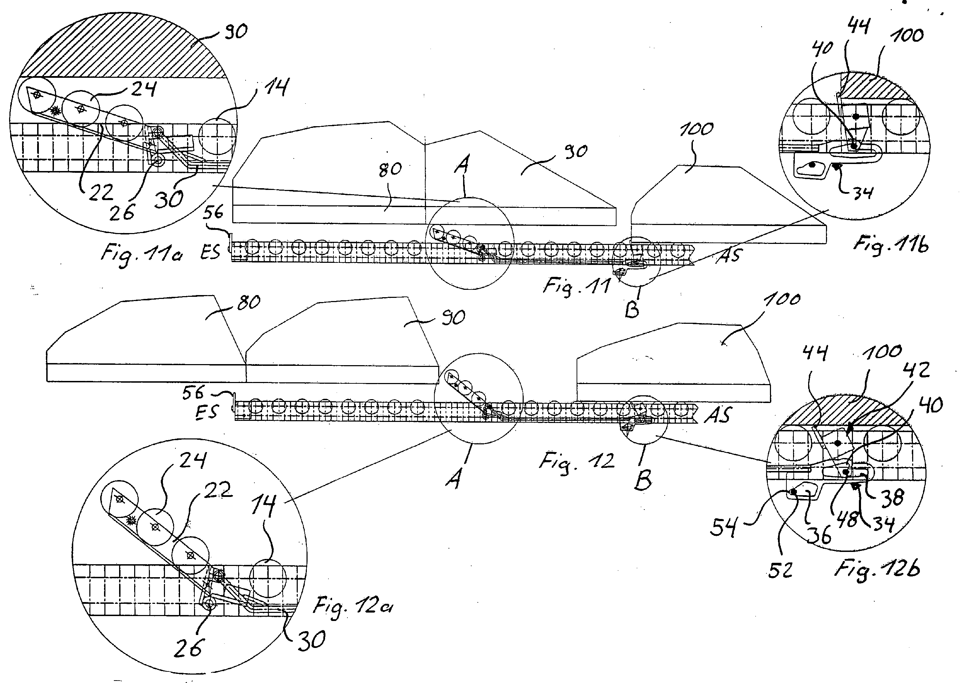

- Fig. 10: das Durchlaufregal von Fig. 1 mit einem kurzen Ladungsträger an einem Entnahmeanschlag
- Fig. 10a: das Detail A von Fig. 10
- Fig. 10b: das Detail B von Fig. 10
- Fig. 11: das Durchlaufregal von Fig. 1 bei der Entnahme von zwei kurzen Ladungsträgern
- Fig. 11a: das Detail A von Fig. 11
- Fig. 11b: das Detail B von Fig. 11
- Fig. 12: das Durchlaufregal von Fig. 1 nach der Entnahme von zwei kurzen Ladungsträgern
- Fig. 12a: das Detail A von Fig. 12
- Fig.12b: das Detail B von Fig. 12.

Der Aufbau des Durchlaufregals 10 wird nachstehend anhand der Fig. 1, 1a und 1b erläutert. Das Durchlaufregal 10 weist eine oder mehrere nebeneinander angeordnete Durchlaufbahnen 12 auf, deren Förderebene FE von Transportrollen 14 gebildet wird, wobei die Förderebene FE von der Aufgabeseite AS zur Entnahmeseite ES hin nach unten geneigt ist. Vor der Entnahmeseite ES ist eine Separiervorrichtung vorgesehen, die eine Vereinzelungsanschlageinrichtung 16 und eine Steuerfahneneinrichtung 20 aufweist, die in Förderrichtung FR nacheinander angeordnet sind. Die Steuerfahneneinrichtung 20 und die Vereinzelungsanschlageinrichtung 16 sind durch ein Betätigungsgestänge 18 miteinander verbunden.

Wie es in Fig. 1a im Detail gezeigt ist, umfasst die Steuerfahneneinrichtung 20 eine Steuerfahne 22 mit Transportrollen 24, die aus der in Fig. 1a gezeigten Stellung, in der sie sich in Richtung der Entnahmeseite ES über die Förderebene FE hinaus nach vorne erstreckt, in eine zweite Stellung um eine Schwenkachse 26 verschwenkbar ist, in der die Transportrollen 24 zusammen mit den Transportrollen 14 die Förderebene FE bilden. Diese Stellung ist beispielsweise in Fig. 4a gezeigt. An der Steuerfahne 22 ist die Betätigungsstange 30 des Betätigungsgestänges 18 an einem Anlenkpunkt 28 so angelenkt, dass die Betätigungsstange 30 bei der Verschwenkung der Steuerfahne 22 aus der ersten Stellung in die zweite Stellung nach vorne, d. h. in Richtung der Entnahmeseite ES bewegt wird.

An dem hinteren Ende der Betätigungsstange 30 ist im Bereich der Vereinzelungsanschlageinrichtung 16 eine Steuerplatte 34 befestigt. Die Vereinzelungsanschlageinrichtung 16 umfasst ein um eine sich quer zu Förderrichtung FR erstreckende Achse 50 verschwenkbares Anschlagelement 42 mit einem Anschlagarm 44, der sich normalerweise über die Förderebene FE hinaus erstreckt und einem sich nach unten erstreckenden Führungsarm 46. An dem unteren Ende des Führungsarms 46 ist ein sich quer zur Förderrichtung FR erstreckender Führungsbolzen 48 vorgesehen.

Der Führungsbolzen 48 erstreckt sich durch eine in der Steuerplatte 34 vorgesehene erste Führungsöffnung 38, die im Wesentlichen teilkreisförmig ausgebildet ist, so dass sich der Führungsbolzen 48 in der in Fig. 1 b gezeigten Stellung des Steuerelements 34 bei einer Verschwenkung des Anschlagelements 42 in der Führungsöffnung 38 hin und herbewegen kann. Im oberen Rand der Führungsöffnung 38 ist eine Rastaussparung 40 vorgesehen, in die der Führungsbolzen 48 eingreift, wenn sich die Steuerplatte 34 in einer unteren Stellung befindet, wie sie beispielsweise in Fig. 5b gezeigt ist. Unterhalb der ersten Führungsöffnung 38 und in Richtung Entnahmeseite ES versetzt ist in der Steuerplatte 34 eine zweite Führungsöffnung 36 vorgesehen, durch die sich eine fest angeordnete Führungsstange 52 quer zur Förderrichtung FR erstreckt. Die zweite Führungsöffnung 36 weist in ihrer unteren vorderen Ecke eine Ausnehmung 54 auf, in die die Führungsstange 52 in der in Fig. 1 b gezeigten Stellung eingreift. Von der Ausnehmung 54 aus erweitert sich die zweite Führungsöffnung 36 über einen entnahmeseitigen schrägen Rampenabschnitt 55 in die hintere Richtung nach oben, wobei der Rampenabschnitt 55 über eine Biegung horizontal ausläuft.

Die Fig. 2, 2a und 2b zeigen das Durchlaufregal 10 von Fig. 1 vor Auftreffen eines langen Ladungsträgers 60 auf das Anschlagelement 42. Die Steuerfahne 22 wird durch die Federkraft einer Federeinrichtung (nicht gezeigt) in der ersten Stellung gehalten, in der sie sich über die Förderebene FE hinaus erstreckt. Die Betätigungsstange 30 befindet sich deshalb in ihrer hinteren Stellung, wodurch die Steuerplatte 34 so weit nach hinten bewegt wurde, dass sich die Führungsstange 52 in der Ausnehmung 54 befindet. Die Steuerplatte 34 befindet sich deshalb in einer angehobenen Position.

Fig. 3 zeigt die Durchlaufbahn 12 nach dem Auftreffen des Ladungsträgers 60 auf den Anschlagarm 44 des Anschlags 42. Durch das Auftreffen der Vorderkante des Ladungsträgers 60 an dem Anschlagarm 44 wird das Anschlagelement 42 so weit verschwenkt, bis sich der Anschlagarm 44 unterhalb der Förderebene FE befindet, so dass sich der Ladungsträger 60 weiter in Förderrichtung FR bewegen kann. Der Führungsbolzen 48 wird dabei innerhalb des teilkreisförmigen Abschnitts der Führungsöffnung 38 von der in Fig. 2b linken Position in eine mittlere Position unterhalb der Rastaussparung 40 bewegt, wie dies in Fig. 3b gezeigt ist. Die Führungsstange 52 befindet sich immer noch in der Ausnehmung 54.

Fig. 4 zeigt das Durchlaufregal 10 in einer Transportstellung des Ladungsträgers 60, in der die Vorderkante des Ladungsträgers 60 die Steuerfahne 22 in die zweite Stellung verschwenkt hat. Dabei wurde die Betätigungsstange 30 aus der in Fig. 3 gezeigten hinteren Stellung in die in Fig. 4 gezeigte vordere Stellung bewegt, weshalb sich der Führungsbolzen 38 im hinteren, in Fig. 4b rechten Ende des teilkreisförmigen Abschnitts der Führungsöffnung 38 befindet. Die Führungsstange 52 befindet sich im erweiterten Raum der Führungsöffnung 36. Die Steuerplatte 34 wird weiter in einer oberen Position gehalten, da der obere Rand der Führungsöffnung 38 auf dem Führungsbolzen 48 aufliegt.

Fig. 5 zeigt das Durchlaufregal 10, nachdem die hintere Kante des Ladungsträgers 60 das Anschlagelement 42 passiert hat. Es wird nun keine Kraft mehr auf den Anschlagarm 44 ausgeübt, so dass das Anschlagelement 42 durch Schwerkraft bzw. Federkraft wieder so weit zurück verschwenkt wird, bis sich der Anschlagarm 44 über die Förderebene FE erstreckt. Der Führungsbolzen 48 wird hierbei innerhalb des teilkreisförmigen Abschnitts der Führungsöffnung 38 so weit nach links verschwenkt, bis er sich unterhalb der Rastaussparung 40 befindet. Da sich die Führungsstange 52 in dem freien Raum der zweiten Führungsöffnung 36 befindet, kann sich die Steuerplatte 34 nach unten bewegen und der Führungsbolzen 48 kommt in der Rastaussparung 40 zum Eingriff. Hierdurch wird das Anschlagelement 42 verriegelt. Es kann keine Schwenkbewegung (in Fig. 5b gegen die Uhrzeigerrichtung) durchführen, wenn auf den Anschlagarm 44 eine Kraft in Förderrichtung FR ausgeübt wird.

Die Fig. 6, 6a und 6b zeigen die Durchlaufbahn 12 zu dem Zeitpunkt, an dem der Ladungsträger 60 mit seiner Vorderkante an dem Entnahmeanschlag 56 an der Entnahmeseite ES anschlägt. Wie es gezeigt ist, ist die Länge b des Ladungsträgers 60 in Förderrichtung größer als der Abstand a zwischen dem Entnahmeanschlag 56 und dem vorderen Ende der Steuerfahne 22, wenn sich die Steuerfahne 22 in ihrer zweiten Stellung befindet. Aus diesem Grund wird von dem Ladungsträger 60 eine Gewichtskraft auf die Steuerfahne 22 ausgeübt, so dass die Steuerfahne 22 in ihrer zweiten Stellung verbleibt. Deshalb befindet sich das Anschlagelement 42 weiter in seiner verriegelten Stellung, so dass ein nachfolgender Ladungsträger 70 mit seiner Vorderkante an dem Anschlagarm 44 zum Stillstand kommt. Die Ladungsträger 60 und 70 befinden sich im Abstand zueinander.

Die Fig. 7, 7a und 7b zeigen die Durchlaufbahn 12 zum Zeitpunkt des Abhebens des Ladungsträgers 60 beispielsweise durch einen Gabelstapler. Die Steuerfahne 22 liegt mit ihrem vorderen Ende an der Unterseite des Ladungsträgers 60 an. Sie ist durch die Federkraft nach oben über die Förderebene FE hinaus verschwenkt, befindet sich jedoch noch zwischen der ersten und der zweiten Stellung, d. h. sie ist noch nicht ganz nach oben verschwenkt. Die Steuerplatte 34 wurde durch diese Bewegung so weit nach vorne verschoben, dass sich die Führungsstange 52 in etwa im mittleren Bereich der Führungsöffnung 36 an der Biegung zu dem Rampenabschnitt 55 befindet. Solange die Steuerfahne 22 durch den Ladungsträger 60 bei der Entnahme belastet ist, verformt sich die Führungsstange 52 elastisch und das Anschlagelement 42 ist gesperrt bis zur vollständigen Freigabe der Steuerfahne 22. Diese Elastizität verhindert, dass der Führungsbolzen 48 aus der Rastaussparung 40 herausgezogen wird, so dass das Anschlagelement 42 weiterhin verriegelt ist. Aus diesem Grund wird der nachfolgende Ladungsträger 70 weiterhin durch den Anschlagarm 44 zurückgehalten.

Fig. 8 zeigt das Durchlaufregal 10 zu dem Zeitpunkt, in dem der Ladungsträger 60 vollkommen von der Durchlaufbahn 12 abgehoben ist und die Steuerfahne 22 freigibt. Die Steuerfahne 22 wird deshalb durch die Federkraft in ihre erste Stellung bewegt. Hierdurch wird die Betätigungsstange 30 weiter nach vorne bewegt, wodurch die Führungsstange 52 entlang des vorderen, rampenförmigen Abschnittes 55 der Führungsöffnung 36 in die Ausnehmung 54 gleitet. Die Steuerplatte 34 wird hierdurch so weit angehoben, dass der Führungsbolzen 48 außer Eingriff mit der Rastaussparung 40 kommt, so dass das Anschlagelement 42 aufgrund der durch die Vorderkante des Ladungsträgers 70 auf den Anschlagarm 42 ausgeübten Kraft so verschwenkt werden kann, dass sich der Anschlagarm 44 unter der Förderebene FE befindet. Der Ladungsträger 70 wird hierdurch freigegeben und kann sich in Richtung der Steuerfahne 22 bewegen. Dies entspricht der in den Fig. 3, 3a und 3b gezeigten Stellung des Ladungsträgers 60. Der Transportvorgang beginnt von Neuem.

Die Fig. 9 bis 12 zeigen das Verhalten der Durchlaufbahn 12 des Durchlaufregals 10 bei Förderung von Ladungsträgern 80, 90, deren Länge c kürzer ist als der Abstand a zwischen dem Entnahmeanschlag 56 und dem vorderen Ende der Steuerfahne 22, wenn sich die Steuerfahne 22 in der zweiten Stellung befindet. Wie es in Fig. 10 gezeigt ist, hat die Hinterkante des vorderen Ladungsträgers 80 die Steuerfahne 22 passiert, wenn sich die Vorderkante des Ladungsträgers 80 an dem Entnahmeanschlag 56 befindet. Deshalb wird die Steuerfahne 22 freigegeben, auch wenn sich der Ladungsträger 80 noch auf der Durchlaufbahn 12 befindet. Die Steuerfahne 22 wird in ihre erste Stellung zurück verschwenkt (Fig. 10), so dass das Anschlagelement 42 entriegelt wird, und der nachlaufende Lagerbehälter 90 nachlaufen kann bis er an dem vorderen Ladungsträger 80 anliegt. Die Ladungsträger 80, 90 werden dann gemeinsam von dem Durchlaufregal abgehoben (Fig. 11) bis die Steuerfahne 22 vollkommen freigegeben wird. Die Stellungen und Wirkungen der einzelnen Elemente der Durchlaufbahn 12 in Fig. 11 und Fig. 12 entsprechen den Stellungen, die in den Fig. 7 und 8 gezeigt ist. Während des Abhebens der Ladungsträger 80, 90 liegt deshalb ein nachfolgender Ladungsträger 100 an dem Anschlagarm 44 des Anschlagelements 42 an, bis die Steuerfahne 22 vollkommen freigegeben wird. Erst dann wird das Anschlagelement 42 entriegelt und der nachfolgende Behälter 100 kann nachlaufen.

## Patentansprüche

1. Durchlaufregal mit Separiervorrichtung zur Separierung von von einer Aufgabeseite (AS) zu einem Entnahmeanschlag an einer Entnahmeseite (ES) hin beförderten Ladungsträgern (60, 70, 80, 90) unterschiedlicher Länge, mit
- einer Steuerfahne (22), die durch einen sich in Förderrichtung (FR) nach vorne bewegenden Ladungsträger (60, 70, 80, 90) aus einer ersten Stellung, in der sie sich über die Förderebene (FE) hinaus erstreckt, nach vorne in eine zweite Stellung verschwenkbar ist, in der sie in der Förderebene (FE) liegt,
- einer in Förderichtung (FR) der Ladungsträger (60, 70, 80, 90) stromaufwärts vorgesehen Vereinzelungsanschlageinrichtung (16) mit einem Anschlagelement (42), die über eine Betätigungsstange (30) so mit der Steuerfahne (22) in Verbindung steht, dass sich das Anschlagelement (42) in einem verriegelten Anschlagzustand befindet, in dem es sie sich über die Förderebene (FR) hinaus erstreckt, wenn sich die Steuerfahne (22) in ihrer zweiten Stellung befindet, und in einem Freigabezustand befindet, in dem es sich unter die Förderebene (FE) bewegen kann, wenn sich die Steuerfahne (22) in der ersten Stellung befindet,
**dadurch gekennzeichnet, dass**
der Abstand (a) zwischen dem Entnahmeanschlag (ES) und der Steuerfahne (22) größer ist als die Länge (c) in Förderrichtung des kleinsten Ladungsträgers (80) und kleiner ist als die Länge (b) in Förderrichtung des größten Ladungsträgers (60), wenn sich die Steuerfahne (22) in ihrer zweiten Stellung befindet.

2. Durchlaufregal nach Anspruch 1, **dadurch gekennzeichnet, dass**
- die Betätigungsstange (30) an der Steuerfahne (22) so angelenkt ist, dass die Betätigungsstange (30) bei der Verschwenkung der Steuerfahne (22) in die zweite Stellung nach vorne bewegt wird,
- das Anschlagelement (42) um eine quer zur Förderrichtung verlaufende Achse (50) schwenkbar gelagert ist und einen sich nach oben erstreckenden Anschlagarm (44) und einen sich nach unten erstreckenden Führungsarm (46) aufweist, von dem sich ein Führungsbolzen (48) quer zur Förderrichtung erstreckt,
- eine Führungsstange (52) im Bereich des Anschlagelements (42) quer zur Förderrichtung (FR) fest angeordnet ist,
- an dem hinteren Ende der Betätigungsstange (30) eine Steuerplatte (34) angebracht ist, durch die quer zur Förderrichtung (FR) eine erste Führungsöffnung (38), in die der Führungsbolzen (48) eingreift, und eine zweite Führungsöffnung (36) ausgebildet ist, in die die Führungsstange (52) eingreift,
- die Innenkontur der ersten Führungsöffnung (38) so ausgebildet ist, dass sich der Führungsbolzen (48) bei einer Verschwenkung des Anschlagelements (42) in der ersten Führungsöffnung (38) bewegen kann, wenn sich die Steuerplatte (34) in einer angehobenen Position befindet,
- in dem oberen Rand der Innenkontur eine Rastaussparung (40) ausgebildet ist, in die Führungsbolzen (48) eingreifen kann, wenn sich die Steuerplatte (34) in einer abgesenkten Position befindet, und
- die Innenkontur der zweiten Führungsöffnung (36) so ausgebildet ist, dass die Führungsstange (52) die Steuerplatte (34) bei einer Bewegung nach hinten aus der abgesenkten Position in die angehobene Position bringt, so dass der Führungsbolzen (48) außer Eingriff mit der Rastaussparung (40) kommt.
